(19) **Europäisches Patentamt**
**European Patent Office**
**Office européen des brevets**

(11) **EP 4 233 556 A2**

(12) **EUROPEAN PATENT APPLICATION**

(43) Date of publication:
**30.08.2023 Bulletin 2023/35**

(21) Application number: **23168309.5**

(22) Date of filing: **06.07.2017**

(51) International Patent Classification (IPC):
***A23L 2/60*** *(2006.01)*

(52) Cooperative Patent Classification (CPC):
(C-Sets available)
**A23J 1/14; A23G 1/44; A23J 3/14; A23L 2/60;
A23L 11/30; A23L 33/185;** A23V 2002/00;
Y02P 60/87 (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2016 EP 16178348
19.04.2017 EP 17166996**

(62) Document number(s) of the earlier application(s) in
accordance with Art. 76 EPC:
**17740663.4 / 3 481 220**

(71) Applicant: **DSM IP Assets B.V.
6411 TE Heerlen (NL)**

(72) Inventors:
• **SHI, Jing
6100 AA ECHT (NL)**
• **SMOLDERS, Gerardus Johannes Franciscus
6100 AA ECHT (NL)**

(74) Representative: **DSM Intellectual Property
P.O. Box 4
6100 AA Echt (NL)**

<u>Remarks:</u>
This application was filed on 17-04-2023 as a
divisional application to the application mentioned
under INID code 62.

(54) **SWEET RAPESEED PROTEIN ISOLATE AND PROCESS FOR OBTAINING IT**

(57) The present invention describes a native rapeseed protein isolate which has a sweetness equivalent to at least 5 g/l of an aqueous sucrose solution when provided as a 2 wt.% aqueous solution.

**EP 4 233 556 A2**

**(Cont. next page)**

(52) Cooperative Patent Classification (CPC): (Cont.)

C-Sets
A23V 2002/00, A23V 2200/132, A23V 2250/24,
A23V 2250/548

## Description

### Field of the invention

The present invention is directed to a sweet rapeseed protein isolate, compositions, food products and beverage comprising the rapeseed protein isolate.

### Background of the invention

Sweeteners are well known as ingredients used most commonly in the food, beverage, or confectionary industries. The sweetener can either be incorporated into a final food product during production or for stand-alone use, when appropriately diluted, as a tabletop sweetener or an at-home replacement for sugars in baking. Sweeteners include natural sweeteners such as sucrose, high fructose corn syrup, molasses, maple syrup, and honey and artificial sweeteners such as aspartame, saccharine, and sucralose.

Sweetness is determined from sensory profiles. For example, some substances can have a faster sweetness build (*i.e.*, a shorter time to maximum sweetness intensity), some have an immediate sweetness onset (*i.e.*, immediate perception of sweetness), some have an artificial sweetness, some may have a more bitter or acidic taste. Artificial sweetness refers to the intensity of flavor that is associated with known artificial sweeteners. Bitter taste is assessed as the taste of caffeine, and can be scored as having no perception of bitterness to very intense bitterness. Acidic taste is assessed as the taste of citric acid, and can be scored as having no perception of acidity to very intense acidity. Such characteristics can be assessed using trained sensory panels.

The use of vegetable based proteins in food products is known, for example WO 2008/094434 discloses the use of wheat protein isolates as an alternative to the use of egg yolk protein in compositions. However, the use of wheat protein isolates may not be desirable for those with gluten allergies and there may also be intolerances to soy based proteins and egg white based proteins. Alternatively, soy protein is widely used. However, in view of some intolerance to soy products there is a need to find still other sources of vegetable proteins.

Suitable alternatives include pea protein and rapeseed protein. Rapeseed seeds are rich in oil and contain considerable amounts of protein that accounts for 17 to 25% of seed dry weight. Processing rapeseed for oil for human consumption produces rapeseed meal ((also referred to as cake; 60%) as a by-product which contains about 30 to 40% protein. The rapeseed used for this purpose is usually of the varieties *Brassica napus* and *Brassica juncea*. These varieties contain only low levels of erucic acid and glucosinolate, and are also known as Canola. Canola is a contraction of Canada and ola, for "oil low acid", but is now a generic term defined as rapeseed oil comprising <2% erucic acid and <30 mmol/g glucosinolate. The resultant rapeseed meal is currently used as a high-protein animal feed.

Protein is available as hydrolysates, native protein, concentrates and isolates. Hydrolysates are proteins that have been partially broken down by exposing the protein to heat, acid or enzymes that break apart the bonds linking amino acids. This makes it taste more bitter, but also allows it to be absorbed more rapidly during digestion than a native (non-hydrolyzed) protein. Isolates are purer than concentrates, meaning other non-protein components have been partially removed to "isolate" the protein. Many concentrates are around 80% protein, which means that on a dry basis, 80% of the total weight is protein. Isolates are typically around 90% protein (dry basis). This is calculated using the Kjeldahl method. The predominant storage proteins found in rapeseed are cruciferins and napins.

Cruciferins are globulins and are the major storage protein in the seed. It is composed of 6 subunits and has a total molecular weight of approximately 300 kDa. Napins are albumins and are a low molecular weight storage protein with a molecular weight of approximately 14 kDa. Napins are more easily solubilized and in for example EP1715752B1 a process is disclosed to separate out the more soluble napin fraction, preferably to at least 85 wt.%. Napins are primarily proposed for use used in applications where solubility is key. EP 1389921 B1 discloses a process of forming a food composition, which comprises extracting rapeseed oil seed meal with an aqueous food-grade salt solution at a temperature of at least 5°C to cause solubilization of protein in the rapeseed oil seed meal and to form an aqueous protein solution having a protein content of 5 to 30 g/l and a pH of 5 to 6.8, and subsequently two protein fractions are separated out via micelles. This is done to improve solubility as the 12S fraction is usually considered as less soluble over a wide pH range when not in the presence of a salt. The resultant protein isolate is incorporated in said food composition in substitution for egg white, milk protein, whole egg, meat fibers, or gelatin. A similar micelle fractionation approach is disclosed in US 2010/041871 leading to separate fractions of cruciferin and napin. DE 10 2014 005466 A1 also describes a process for obtaining purified cruciferin and napin fractions. During the process, also a protein mixture of the two with 55-60% napins and 40-45% cruciferins is obtained. The solubility of this protein mixture is approximately 75%.

It has been found that the high purity rapeseed protein isolate has broadly based functionality in food products, unique among proteinaceous materials. The ability to utilize a protein which is vegetable in origin in food products enables truly vegetarian food products to be provided in instances where egg white and/or animal-derived protein have been used in the absence of any available substitute.

The rapeseed protein isolate may be used in conventional applications of protein isolates, such as protein fortification of processed foods, emulsification of oils, body formers in baked foods and foaming agents in products which entrap gases. The rapeseed protein isolate also has functionalities not exhibited by the source material and isoelectric precipitates. The rapeseed protein isolate has certain functionalities including the ability to be formed into protein fibers and the ability to be used as an egg white substitute or extender in food products where egg white is used as a binder. As described herein, the rapeseed protein isolate provided herein has other functionalities.

However, it is also known that protein extracts from legumes, such as soya, pea or lupin, have a fragrance typical of legumes which is described by test subjects in sensory taste tests as grassy, bean-like, pea-like or green and some rapeseed and sunflower extracts often produce bitter and astringent taste impressions. US 2011/027433 describes the use of an inorganic adsorbed material that added to the vegetable protein extract, to remove unwanted accompanying substances, especially fragrance, flavor, and/or color components. WO 2007/039253 describes hydrolyzed vegetable protein which is obtainable by the hydrolysis of a mixture comprising sunflower protein and at least one other vegetable protein (preferably maize protein) which has improved flavor and/or aroma properties. WO 2004/006693 describes a food product which comprises seed of an oil plant as protein supplement, the oil content of which seed has been reduced. The seed is heat-treated turnip rapeseed or rapeseed meal, where the digestibility of proteins and/or aroma is improved because of heat treatment. US 2004/005395 discloses a fractionated rapeseed protein isolate and its use as a flavor-enhancer in a food product where something sweet becomes sweeter and something salty becomes saltier.

So, in many protein enriched food products additional sugar is required to mask the taste of the protein. There remains a further need to provide protein enriched compositions, such as beverages, that contain a reduced level of sugar but still have a good flavor balance and nutritional profile.

It has been found though that the rapeseed protein isolate of the present invention is inherently sweet and can therefore be effectively used to simultaneously enrich the protein level, and therefore the nutritional value of a food product and reduce the addition of sugar.

## Description of the Figures

Figure 1 shows the sweetness character of a native rapeseed protein isolate (RI90) solution in water (2 wt.%) compared to sucrose solutions (10 g/l, 30 g/l and 50 g/l).

Figure 2 shows the sweetness character of a native rapeseed protein isolate (RI90) solution in water (2 wt.%) compared to whey ("WPI"), soy ("SOY"), rice ("RICE") and pea ("PEA") protein isolates. X-axis: sweetness intensity score, in g sucrose/liter.

## Detailed description of the invention

Traditionally, for materials having relatively high oil content (>35% on dry matter, rapeseed is approximately 40%) a combination of mechanical pressing and solvent extraction is used for an efficient extraction of the oil (Rosenthal et al., Enzyme and Microbial Technology 19 (1996) 402-420). After the oil is extracted, the pressed material is heat treated to remove the solvent, resulting in a meal with an oil and protein content of 1-5% and 40-50% of the dry matter, respectively. Although the meal has a relative high protein content, the quality of the proteins is reduced significantly resulting from the harsh conditions (i.e., elevated temperature, solvents) employed during the oil extraction. The awareness that these oil extraction conditions are detrimental for the quality of the proteins is one of the factors bolstering the improvement of the cold pressing technology. During cold-pressing, no solvents (like e.g. hexane) are used and the oil is pressed out under mild conditions, resulting in better quality oil and an oilseed pressed meal of higher quality. This oilseed pressed meal has a relatively high oil content (typically >8%, for example >10%, on dry matter basis) and is an excellent source of proteins with preserved functionality. These proteins can be readily extracted from the meal by for instance an aqueous extraction (Rosenthal et al., Enzyme and Microbial Technology 19 (1996) 402-420, Rosenthal et al., Trans iChemE, Part C, 76 (1998) 224-230 and Lawhon et al., J. Food Sci. 46 (1981) 912-916). One of the biggest challenges of this type of processes is that during extraction proteins and oil are extracted concomitantly. This leads to an extract containing a significant amount of oil, present in most cases partly as a stable emulsion making its removal quite difficult. WO 2014/147068 discloses mild extraction of cold-pressed rapeseed meal to obtain protein-rich extracts that are practically fat-free.

We have found that in our process, based on cold-pressed rapeseed meal, a rapeseed protein isolate is obtained with a high level of cruciferins while simultaneously displaying an unprecedented high solubility. There is no need to separate out the protein constituents and yet an unprecedented solubility across a broader pH range can be achieved and maintained. The hypothesis that solubility of rapeseed protein isolate can only be improved by reducing the amount of proteins with lower solubility, such as cruciferins, appears therefore not exclusive. The rapeseed protein isolate obtained according to the invention has a sweetness sufficiently high to replace sugar or other sweeteners in food stuffs.

In a first aspect of the invention, there is provided a native rapeseed protein isolate which has, when brought into a 2 wt.% solution in water, a sweetness equivalent to an aqueous sucrose solution of at least 5 g/l. Preferably, the native rapeseed protein isolate has a sweetness equivalent of least 10 g/l of sucrose, more preferably at least 15g/l of sucrose and especially at least 20g/l of sucrose, when said native rapeseed protein isolate is provided as a 2 wt.% aqueous solution.

In one embodiment, the native rapeseed protein isolate comprises 40 to 65 wt.% cruciferins and 35 to 60 wt.% napins.

In another embodiment, the native rapeseed protein isolate of the invention has a solubility of at least 88%, preferably at least 90%, more preferably at least 94%, and most preferably at least 96%, at a pH in the range of from 3 to 10 at a temperature of $23\pm2°C$. This is also known as the soluble solids index (SSI).

For use in human food consumption the native rapeseed protein isolate preferably comprises a low level of salt. This is established by measuring the conductivity. Preferably the conductivity of the native rapeseed protein isolate in a 2 wt.% aqueous solution is less than 9,000 $\mu$S/cm over a pH range of 2 to 12. More preferably the conductivity of the native rapeseed protein isolate in a 2 wt.% aqueous solution is less than 4,000 $\mu$S/cm over a pH range of 2.5 to 11.5. For comparison, the conductivity of an aqueous 5 g/l sodium chloride solution is around 9,400 $\mu$S/cm.

In another embodiment, the native rapeseed protein isolate has a phytate level of less than 0.4 wt.%, preferably of less than 0.25 wt.% and more preferably of less than 0.15 wt.%.

In still another embodiment, the native rapeseed protein isolate has a protein content of at least 90 wt.% (calculated as Kjeldahl N x 6.25) on a dry weight basis, more preferably at least 94 wt.%, most preferably at least 96 wt.% and especially at least 98 wt.%.

Preferably the native rapeseed protein isolate is substantially unhydrolyzed. By substantially unhydrolyzed is meant that the protein is not deliberately hydrolyzed. Hydrolyzation has been found to result in the loss of sweetness.

In another embodiment of the invention there is provided a composition comprising at least 0.1% w/w, more preferably at least 0.5% w/w and most preferably at least 1% w/w of a rapeseed isolate according to the invention, said composition having a statistically significant increase in a sweetness score relative to the composition comprising 0% w/w of a rapeseed isolate of the invention.

It has been found that the soluble native rapeseed protein isolate comprising both cruciferins and napins, obtained from cold pressed oilseed meal and extracted und mild conditions as described in the second aspect of the invention, has a surprisingly sweet flavor. Preferably the native rapeseed protein isolate comprises 40 to 65 wt.% cruciferins and 35 to 60 wt.% napins. The rapeseed protein isolate as disclosed herein has a sweetness that is higher, under certain condition even 2-3 times, than that of other protein isolates such as from pea, rice, soy and whey.

Provided the use of a rapeseed protein isolate according to the first aspect of the invention to enrich the protein level of a food product and reduce the addition of sugar. Consequently, the native rapeseed protein isolate of the invention can be used in food products and dietary supplements, such as for example, ice cream, beverages, chocolate, fruit juices, yogurts, baked goods, and emulsions such as mayonnaise and salad dressings. The food products of may further comprise other ingredients, such as, for example, food starches, sweeteners, spices, seasonings (including salt), food pieces, stabilizers, antioxidants, sterols, soluble fiber, gums, flavorings, preservatives, colorants, and various combinations of any thereof.

In one embodiment, for certain food applications it is desirable to increase the protein content while maintaining the flavor. For example, in US 4,493,853, a chocolate product is described having an increased protein content by the addition of processed cheese. While this approach has several disadvantages, like the relatively large amounts of expensive processed cheese used the need to increase protein content in chocolate clearly exists. Similarly, plant-based protein bars are nowadays gaining popularity and several are available having plant-based protein contents of around 20%. Such bars are made with ingredients such as nuts, nut butters, pumpkin seeds, crisped peas and rice and the like and are optionally dipped and drizzled with chocolate. These bars are intended as on-the-go wholesome protein snack to provide long-lasting energy and satiety.

The rapeseed protein isolate of the present invention can function as protein additive in food products such as bars, chocolate, and the like.

In an aspect of the invention, there is provided a food product, for example a bar and/or chocolate, and a beverage comprising the rapeseed protein isolate according to the first aspect of the invention.

Non-limiting Examples of the invention are described below.

## EXAMPLES

### Test methods

Protein content

Protein content was determined by the Kjeldahl method according to AOAC Official Method 991.20 Nitrogen (Total) in Milk, using a conversion factor of 6.25 was used to determine the amount of protein (% (w/w)).

Conductivity

The conductivity of native rapeseed protein isolate in a 2 wt.% aqueous solution was measured using a conductivity meter: Hach sensION+ EC71.

Solubility test

The below solubility test is adapted from Morr et al. (J. Food Sci. (1985) 50, 1715-1718), the difference being the use of water instead of 0.1 M sodium chloride.

Sufficient protein powder to supply 0.8 g of protein was weighed into a beaker. A small amount of demineralized water was added to the powder and the mixture was stirred until a smooth paste was formed. Additional demineralized water was then added to make a total weight of 40 g (yielding a 2% w/w protein dispersion). The dispersion was slowly stirred for at least 30 min using a magnetic stirrer. Afterwards the pH was determined and adjusted to the desired level (2, 3, 4, etc.) with sodium hydroxide or hydrochloric acid. The pH of the dispersion was measured and corrected periodically during 60 minutes stirring.

After 60 minutes of stirring, an aliquot of the protein dispersion was reserved for protein content determination (Kjeldahl analysis). Another portion of the sample was centrifuged at 20,000 g for 2 min. The supernatant and pellet were separated after centrifugation. The protein content was also determined by Kjeldahl analysis.

$$\text{Protein solubility (\%)} = (\text{protein in supernatant} / \text{protein in total dispersion}) \times 100.$$

Alternative methods for determining solubility are available and in some case use buffers, like borate-phosphate buffer in WO 2011/057408. However, such as values are incomparable with the ones obtained in the instant application that are determined in the absence of buffer.

MW determination by Blue Native PAGE

In the case of Native PAGE the protein charge has an impact on the electrophoretic mobility. In the case of Blue native PAGE (and to the contrary of clear native PAGE), the Coomassie Brilliant Blue dye provides the necessary charges to the protein complexes for the electrophoretic separation.

The proteins were dissolved in 500 mM sodium chloride. As high salt concentrations are incompatible with electrophoretic separation, the sample was diluted 10-fold with water (final salt concentration: 50 mM). Coomassie® G-250 (SimplyBlue™, ThermoFischer Scientific) was used and gels were scanned with an ExQuest™ Spot Cutter (BioRad). Resultant bands after carrying out Blue Native PAGE were observed. It would be expected that bands around 14 kDa indicate 2S, around 150 kDa indicate 7S and around 300 kDa indicate 12S proteins.

Cruciferin/napin (C/N) ratio

The C/N ratio was determined by Size Exclusion Chromatography (SEC) analysis. Samples were dissolved in a 500 mM sodium chloride saline solution and analyzed by HP-SEC using the same solution as the mobile phase. Detection was done by measuring UV absorbance at 280 nm. The relative contribution of cruciferin and napin (%) was calculated as the ratio of the peak area of each protein with respect to the sum of both peak areas.

Phytate level

Phytates were measured at Eurofins using method QD495, based on Ellis et al. (Anal. Biochem. (1977) 77, 536-539).

### Example 1

**Preparation of rapeseed protein isolate from cold-pressed rapeseed oil seed meal**

The rapeseed protein isolate was produced from cold-pressed rapeseed oil seed meal having an oil content of less than 15% on dry matter basis, cleaned and processed below 75°C.

In the extraction step, the cold-pressed rapeseed oil seed meal was mixed with an aqueous salt solution (1 to 5% sodium chloride), at a temperature between 40 to 75°C. The meal to aqueous salt solution ratio was in the range of from 1:5 to 1:20. After about 30 minutes to 1 hour the protein rich solution (extract) was separated from the insoluble material. The pH of the extract was adjusted to neutral and the extract was further processed to clarify the material and remove non-protein substances. In the decreaming step, the residual fat was removed using centrifugation. Non-protein substances were removed by adjusting the pH of the material to neutral in the presence of a salt with which phytate precipitates (e.g. calcium chloride). The formed precipitate is removed via a solid/liquid separation step (e.g. a membrane filter press or centrifugation) in which the impurities are removed in a solid salt form (e.g. calcium phytate). The extract was then concentrated and washed in an ultrafiltration/diafiltration (UF/DF) step. Finally, the washed concentrate was dried in a spray drier with an inlet temperature in the range of from 150 to 200°C and an outlet temperature in the range of from 50 to 100°C resulting in the rapeseed protein isolate. Several batches were prepared and tested.

The conductivity of the resultant native rapeseed protein isolates in a 2% solution was less than 4,000 $\mu$S/cm over a pH range of 2.5 to 11.5.

Blue Native PAGE: Main bands were observed roughly around 300 kDa, between the 242 and 480 kDa MW markers. Some staining was visible as a smear as lower MW (150 kDa and below). No clear bands were observed at 150 kDa. Based on these results, the rapeseed product contains the 12S form of cruciferin. The resultant native rapeseed protein isolate comprised in the range of from 40 to 65% cruciferins and 35 to 60% napins.

The resultant native rapeseed protein isolate contained less than 0.26 wt.% phytate.

The resultant native rapeseed protein isolates had a solubility of at least 88% when measured over a pH range from 3 to 10 at a temperature of $23\pm2$°C as shown for two batches in Table 1.

Table 1

| pH | 3 | 4 | 5 | 6 | 7 | 8 | 9 | 10 |
|---|---|---|---|---|---|---|---|---|
| Sample 1 Solubility (%) | 98 | 96 | 89 | 95 | 95 | 97 | 97 | 98 |
| Sample 2 Solubility (%) | 102.5 | 97.5 | 94.3 | 93.9 | 97.0 | 93.0 | 94.0 | 99.8 |

### Example 2

**Determination of sweetness**

The flavor characteristics can be evaluated by a sensory panel using techniques known in the art. Investigating the effects of flavor, mouthfeel and aftertaste requires an extended evaluation of the products and this was done by using Quantitative Descriptive Analysis (QDA). Therefore, a sensory panel assessed the protein products taking in account Good Sensory Practices. During the QDA measurement the intensities of the attributes were obtained by the Fizz sensory data acquisition system, using unstructured line scales ranging from 0-100. The products were evaluated twice with 11 panel members. The products were given one-by-one to the panel members. The products were given in a white polystyrene cup with a white polystyrene spoon in order to prevent sedimentation during tasting. Data were analyzed using SenPaq (QI-statistics). The following data analysis techniques were used:

- Statistically significant product differences were computed by means of ANOVA (Analysis of Variance) for each attribute
- If a statistically significant product difference occurred, a Multiple Comparison Analysis (Fisher LSD) was computed to investigate which products differed from each other, the mean product score for an attribute followed by different letters are statistically different ($p < 0.05$)
- The statistical significant product differences were displayed
- A PCA-biplot was constructed in order to obtain an explorative view of the attributes and how well the products were spread in the sensory space

*Equal sweetness*

The panelists received a reference sample (2 wt.% rapeseed protein isolate in water) with a potency designated by an arbitrary sweetness value of 50 (middle of the scale), followed by several sucrose solutions coded and balanced with potencies higher than or lower than the reference. Panelists scored for example a sample that is perceived as twice as strong as the reference with a score of 100, half the sweetness was given a value of 25. Scores were gathered by means of FIZZ data acquisition on unstructured line scales ranging from 0-100. The various concentrations of sucrose were first determined by a pretest.

*Sweetness character (by time intensity measurement)*

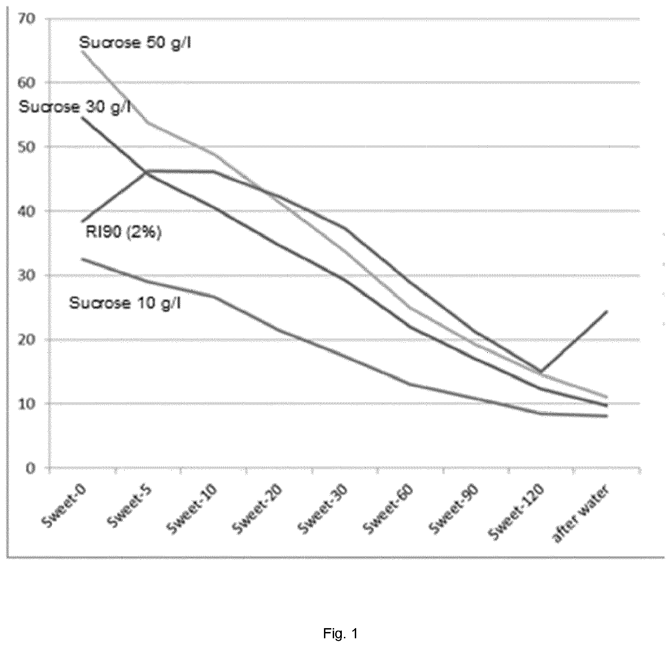

To identify the sweetness character (i.e. initial sweetness, lingering) of 2% rapeseed protein isolate in water compared to sucrose solutions (10 g/l, 20 g/l, 30 g/l, 40 g/l and 50 g/l) the samples were taken into the mouth on instruction of the panel leader. Directly the intensity of the sweetness was scored. After three seconds the sample was swallowed and the intensity was scored again, followed by scoring at 5, 10, 20, 30, 60, 90 and 120 seconds after swallowing. Intensity scores were given on unstructured 0-100 line scales in FIZZ. The samples were evaluated one-by-one in duplicate according to an optimally balanced design. The samples were evaluated one-by-one in duplicate according to an optimally balanced design. Equal sweetness and sweetness character was assessed by comparing a 2 wt.% aqueous solution of the resultant native rapeseed protein isolate with aqueous sucrose solutions of different strengths at room temperature. The results are shown in Table 2 and in Figure 1.

Table 2

|  | Concentration | Relative Sweetness |
|---|---|---|
| Resultant native rapeseed protein isolate | 2 wt.% | 50 |
| Sucrose | 10 g/l | 35 |
| Sucrose | 20 g/l | 49 |
| Sucrose | 30 g/l | 68 |
| Sucrose | 40 g/l | 70 |
| Sucrose | 50 g/l | 78 |

**Example 3**

**Sweetness of rapeseed protein isolate vs. protein isolates from other sources**

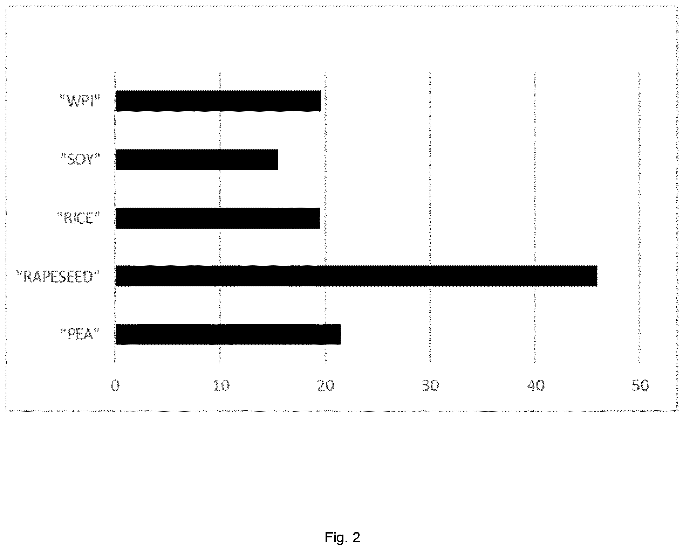

Similar to the procedure of Example 2, the sweetness of 2% rapeseed protein isolate was evaluated in comparison with 2% aqueous solutions of protein isolate from soy (Supro XT 221 D from Solae), pea (Peazazz Neutral 1 from Burcon), rice (Organic Oryzatein Silk 90 from Axiom) and whey (Promil DSA HPDY from Alinda Velco). The results, indicating a rapeseed protein isolate sweetness that is 2-3 times higher than that of the others, are shown in Figure 2.

**Claims**

1. A native rapeseed protein isolate which has, when brought into a 2 wt.% solution in water, a sweetness equivalent to an aqueous sucrose solution of at least 5 g/l.

2. A native rapeseed protein isolate according to claim 1 comprising 40 to 65 wt.% cruciferins and 35 to 60 wt.% napins.

3. A native rapeseed protein isolate according to any one of the preceding claims having a protein content of at least 90 wt.% (Nx6.25) on a dry weight basis.

4. A native rapeseed protein isolate according to any one of the preceding claims wherein the native rapeseed protein isolate in a 2 wt.% solution has a conductivity of less than 9,000 $\mu$S/cm over a pH range of 2 to 12.

5. A native rapeseed protein isolate according to any one of the preceding claims having a phytate level less than 0.4 wt.%.

6. A native rapeseed protein isolate according to any of the preceding claims, having a solubility of at least 88% over a pH range from 3 to 10 at a temperature of $23 \pm 2°C$.

7. A food product comprising the rapeseed protein isolate according to anyone of claims 1 to 6.

8. A food product according to claim 7 which is a beverage or chocolate.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008094434 A
- EP 1715752 B1
- EP 1389921 B1
- US 2010041871 A
- DE 102014005466 A1
- US 2011027433 A
- WO 2007039253 A
- WO 2004006693 A
- US 2004005395 A
- WO 2014147068 A
- US 4493853 A
- WO 2011057408 A

**Non-patent literature cited in the description**

- **ROSENTHAL et al.** *Enzyme and Microbial Technology,* 1996, vol. 19, 402-420
- **ROSENTHAL et al.** *Trans iChemE, Part C,* 1998, vol. 76, 224-230
- **LAWHON et al.** *J. Food Sci.,* 1981, vol. 46, 912-916
- **MORR et al.** *J. Food Sci.,* 1985, vol. 50, 1715-1718
- **ELLIS et al.** *Anal. Biochem.,* 1977, vol. 77, 536-539